# EUROPEAN PATENT APPLICATION

(11) **EP 2 230 620 A1**
(43) Date of publication of application: **22.09.2010**
(21) Application number: 10156566.1
(22) Date of filing: 15.03.2010
(51) Int. Cl.: G06F 21/00, G06Q 10/00

(54) **Application products with in-application subsequent feature access using network-based distribution system**

(30) Priority: 30.09.2009 US 571266; 16.03.2009 US 160640 P
(71) Applicant: APPLE INC., Cupertino, CA 95014 (US)
(72) Inventor: Mirrashidi, Payam, Cupertino, CA 95014 (US); Mitsuji, Hiro, Cupertino, CA 95014 (US); Chu, Michael Kuohao, Cupertino, CA 95014 (US); Verosub, Ellis M., Cupertino, CA 95014 (US); Gharabally, Sam, Cupertino, CA 95014 (US); Mufaddal, Khumri, Cupertino, CA 95014 (US)
(74) Representative: Gillard, Matthew Paul

(57) **Abstract**

An improved system, device and method for accessing locked (secured) features of digital products with assistance from a product distribution site are disclosed. In one embodiment, a digital product can be submitted to a product distribution site for network-based distribution. The digital product can be initially provided such that it provides base functionality but contains one or more locked features that, if unlocked, can supplement the base functionality. If the digital product that has been submitted is approved, the digital product becomes available at the product distribution site such that users can search, browse and purchase the digital product. Once the digital product has been purchased, download and installed on a user's computing device, the user is able to utilize the digital product. However, since the digital product itself includes one or more locked features, the user is not able to utilize such features until a subsequent purchase is performed. Advantageously, the subsequent purchase can be invoked from the digital product. In doing so, the digital product interacts (directly or indirectly) with a remote server (e.g., the product distribution site) to purchase access or usage for one or more of the locked features within the digital product. Once access or usage for the one or more locked features has been purchased, the one or more locked features within the digital product can be unlocked and thereafter utilized.

## Description

### CROSS-REFERENCE TO RELATED APPLICATION

This application claims priority to U.S. Provisional Patent Application No. 61/160,640, filed March 16, 2009, entitled "APPLICATION PRODUCTS WITH IN-APPLICATION SUBSEQUENT FEATURE ACCESS USING NETWORK-BASED DISTRIBUTION SYSTEM", which is hereby incorporated herein by reference.

### BACKGROUND OF THE INVENTION

### Field of the Invention

The present invention relates to distribution of digital products and, more particularly, to network-based distribution of digital products.

### Description of the Related Art

Today, online media stores, such as iTunes™ Media Store, allow customers (i.e., online users) to purchase or rent media items, such as music or videos, over the Internet. Often, at online media stores, numerous media items made available and are provided by various different content providers, such as music labels or movie companies. Software tools, such as iProducer™ and Label Connect™ available from Apple Inc. of Cupertino, California, can assist content providers with online submission of media content to the iTunes™ Media Store.

Software programs are also available to be purchased or licensed at retail stores as well as online stores. Conventionally, a software program is primarily purchased as a compact disc (CD) containing the software program. Alternatively, purchasers can often purchase and download a software program from an online retailer or a software provider's website. However, when an online retailer operates to sell software programs of various independent parties, there are difficulties in providing the digital program files and supporting information/files to the online retailers. This problem is exacerbated by a large number of small software providers that often desire to partner with the online retailer. As a result, online retailers that receive online submissions face substantial burdens and difficulties due to the wide range of variation with respect to the submissions.

Conventionally, after purchasing, download and installing a software program on a computing device, the software program is essentially a static product. Though some software programs can receive updates for fixing of errors or bugs or virus protections, these updates are freely provided and serve to maintain existing functionality. Unfortunately, some software providers have a need to facilitate follow-on purchases that augment the initial software programs. However, once a software program has be purchased online, download and installed, there is conventionally no convenient means for that software program to itself facilitate an in-application purchase of rights or privileges to additional functionality, components etc. of the software program.

### SUMMARY

The invention relates to a system, device and method for accessing locked (secured) features of digital products with assistance from a product distribution site.

A digital product can be submitted to a product distribution site for network-based distribution. The digital product can be initially provided such that it provides base functionality but contains one or more locked features that, if unlocked, can supplement the base functionality. If the digital product that has been submitted is approved, the digital product becomes available at the product distribution site such that users can search, browse and purchase the digital product. Once the digital product has been purchased, download and installed on a user's computing device, the user is able to utilized the digital product. However, since the digital product itself includes one or more locked features, the user is not able to utilize such features until a subsequent purchase is performed. Advantageously, the subsequent purchase can be invoked from the digital product. In doing so, the digital product interacts (directly or indirectly) with remote server (e.g., the product distribution site) to purchase access or usage for one or more of the locked features within the digital product. Once access or usage for the one or more locked features has been purchased, the one or more locked features within the digital product can be unlocked and thereafter utilized.

In one embodiment, the digital products are computer program products (e.g., computer software programs). The product distribution site can also be referred to as an online product hosting site. Although the features of the digital products can vary depending on implementation, some examples of features include: modules, tools, characters, functionality, content, or data. Features can also be referred to as components.

The invention can be implemented in numerous ways, including as a method, system, device, apparatus (including computer readable medium and graphical user interface). Several embodiments of the invention are discussed below.

As a method for unlocking supplemental features of an application program, where the method operates on a computing device, one embodiment of the invention includes at least the acts of: executing an application program on the computing device, the application program being previously acquired from a remote network-based application distribution system, the application program including at least one supplemental feature that is presently locked and located within the application program but available to be unlocked; determining, at the computing device, that a user of the application program desires to acquire usage of the at least one supplemental feature that is presently locked; requesting that the remote network-based application distribution system approve unlocking of the at least one supplemental feature; receiving an authorization from the remote network-based application distribution system that the at least one supplemental feature is approved for unlocking; and thereafter unlocking the at least one supplemental feature of the application program at the computing device, thereby permitting the application program to utilize the at least one supplemental feature.

As a method for unlocking supplemental features of an application program, where the method operates on a computing device, another embodiment of the invention includes at least the acts of: executing an application program on the computing device, the application program being previously acquired from a remote network-based application distribution system; offering, via the application program, a user of the computing device at least one supplemental feature that is presently locked and located within the application program but available to be unlocked; receiving an indication that the user of the computing device desires to acquire usage of the at least one supplemental feature that is presently locked; requesting, in response to the indication being received, supplemental feature information from the remote network-based application distribution system, the supplemental feature information including at least descriptive information pertaining to the at least one supplemental feature; subsequently receiving, at the computing device, the supplemental feature information from the remote network-based application distribution system; presenting the supplemental feature information at the computing device; confirming, at the computing device, that the user desires to acquire usage of the at least one supplemental feature that is presently locked; requesting that the remote network-based application distribution system approve unlocking of the at least one supplemental feature; receiving an authorization from the remote network-based application distribution system that the at least one supplemental feature is approved for unlocking; and thereafter unlocking the at least one supplemental feature of the application program at the computing device, thereby permitting the application program to utilize the at least one supplemental feature.

As a computer-implemented method for managing unlocking of supplemental features of application programs that have been previously acquired from a network-based application distribution system, one embodiment of the invention includes at least the acts of: receiving a request from a computing device for supplemental feature information from the remote network-based application distribution system; retrieving the supplemental feature information associated with the supplemental feature of the application program, the supplemental feature information including at least descriptive information pertaining to a supplemental feature of an application program previously acquired from the network-based application distribution system; sending the retrieved supplemental feature information to the computing device; receiving a request from the computing device to unlock the supplemental feature of the application program; determining whether the network-based application distribution system approves unlocking of the supplemental feature; and sending an authorization to the computing device for unlocking the supplemental feature if the determining determines that the network-based application distribution system has approved unlocking of the supplemental feature.

As a computer-implemented method for managing unlocking of supplemental features of application programs that have been previously acquired from a network-based application distribution system, another embodiment of the invention includes at least the acts of: receiving a request from the computing device to unlock a supplemental feature of an application program previously acquired from the network-based application distribution system; determining whether the network-based application distribution system approves unlocking of the supplemental feature; and sending an authorization to the computing device for unlocking the supplemental feature if the determining determines that the network-based application distribution system has approved unlocking of the supplemental feature.

As a mobile computing device, one embodiment of the invention includes at least: at least one application program having at least one locked feature; and a commerce server resident on the mobile computing device. The commerce server being configured to interact with a remote server to facilitate access to the at least one locked feature of the at least one application program, while the at least one application program is operating on the mobile computing device.

As a computer readable medium including at least computer program code executable by a computing device stored thereon for unlocking supplemental components of a program product, one embodiment of the invention includes at least: computer program code for executing a program product on the computing device, the program product being previously acquired from a remote network-based application distribution system, the program product including at least one supplemental component that is presently locked and located within the program product but available to be unlocked; computer program code for determining, at the computing device, that a user of the program product desires to acquire usage of the at least one supplemental component that is presently locked; computer program code for requesting that the remote network-based application distribution system approve unlocking of the at least one supplemental component; computer program code for receiving an authorization from the remote network-based application distribution system that the at least one supplemental component is approved for unlocking; and computer program code for unlocking the at least one supplemental component of the program product at the computing device, thereby permitting the program product to utilize the at least one supplemental component.

As a computer readable medium including at least computer program code executable by a computing device stored thereon for managing unlocking of supplemental components of application programs that have been previously acquired from a network-based application distribution system, one embodiment of the invention includes at least: computer program code for receiving a request from the computing device to unlock a supplemental component of a program product previously acquired from the network-based application distribution system; computer program code for determining whether the network-based application distribution system approves unlocking of the supplemental component; and computer program code for sending an authorization to the computing device for unlocking the supplemental component if it is determined determines that the network-based application distribution system has approved unlocking of the supplemental component.

Other aspects and advantages of the invention will become apparent from the following detailed description taken in conjunction with the accompanying drawings which illustrate, by way of example, the principles of the invention.

### BRIEF DESCRIPTION OF THE DRAWINGS

The invention will be readily understood by the following detailed description in conjunction with the accompanying drawings, wherein like reference numerals designate like elements, and in which:

FIG. 1 is a block diagram of a product submission and distribution system according to one embodiment of the invention.

FIG. 2 is a block diagram of a client, or client device, according to one embodiment of the invention.

FIGs. 3A-3C are diagrams illustrating accessing supplemental features according to one embodiment of the invention.

FIG. 4 is a flow diagram of a digital product submission process according to one embodiment of the invention.

FIG. 5 is a flow diagram of a supplemental feature client process according to one embodiment of the invention.

FIGs. 6A and 6B are flow diagrams of a supplemental feature client process according to one embodiment of the invention.

FIG. 7 is a flow diagram of a supplemental feature server process according to one embodiment of the invention.

### DETAILED DESCRIPTION OF CERTAIN EMBODIMENTS

The invention relates to a system, device and method for accessing locked (secured) features of digital products with assistance from a product distribution site.

A digital product can be submitted to a product distribution site for network-based distribution. The digital product can be initially provided such that it provides base functionality but contains one or more locked features that, if unlocked, can supplement the base functionality. If the digital product that has been submitted is approved, the digital product becomes available at the product distribution site such that users can search, browse and purchase the digital product. Once the digital product has been purchased, download and installed on a user's computing device, the user is able to utilized the digital product. However, since the digital product itself includes one or more locked features, the user is not able to utilize such features until a subsequent purchase is performed. Advantageously, the subsequent purchase can be invoked from the digital product. In doing so, the digital product interacts (directly or indirectly) with a remote server (e.g., the product distribution site) to purchase access or usage for one or more of the locked features within the digital product. Once access or usage for the one or more locked features has been purchased, the one or more locked features within the digital product can be unlocked and thereafter utilized.

In one embodiment, the digital products are computer program products (e.g., computer software programs). The product distribution site can also be referred to as an online product hosting site. Although the features of the digital products can vary depending on implementation, some examples of features include: modules, tools, characters, functionality, content, or data. Features can also be referred to as components.

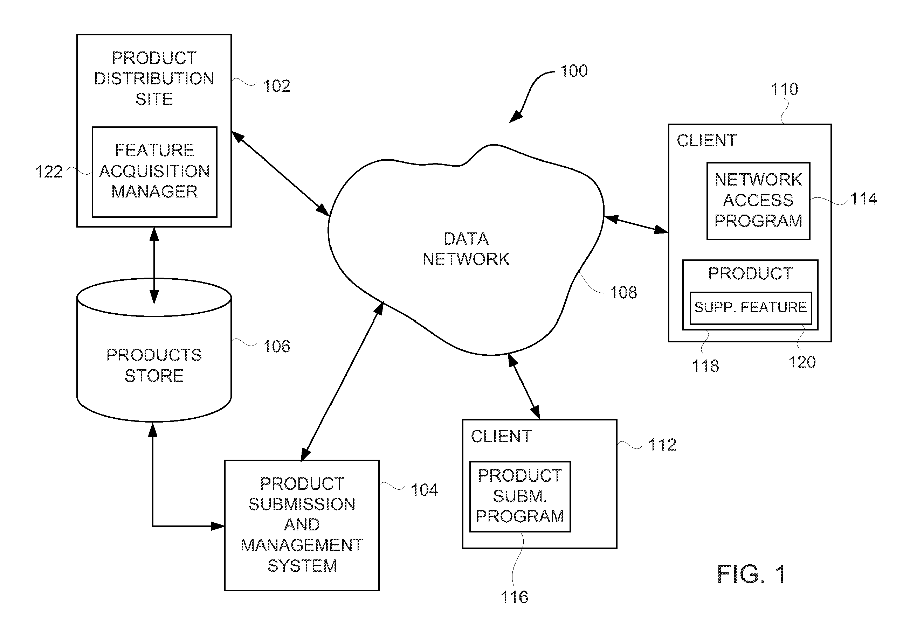

Embodiments of various aspects of the invention are discussed below with reference to FIGs. 1 - 7. However, those skilled in the art will readily appreciate that the detailed description given herein with respect to these figures is for explanatory purposes as the invention extends beyond these limited embodiments.

FIG. 1 is a block diagram of a product submission and distribution system 100 according to one embodiment of the invention. The product submission and distribution system 100 includes a product distribution site 102. The product distribution site 102 provides an online access point for distribution of various digital products. For example, the product distribution site 102 can be referred to as an online store. A product submission and management system 104 operates to receive submissions of digital products from various digital product submitters. The product submission and management system 104 can process submission of digital products and authorize distribution of approved digital products. The digital products can be stored in a products store 106. In one embodiment, the products store 106 includes a mass data store and/or one or more databases. The products store 106 provides mass storage of the numerous digital products that are available for distribution (e.g., purchase). For example, digital products that have been purchased can be accessed from the products store 106 over a data network 108 by way of the product distribution site 102. Examples of digital products are computer program products such as applications (or application programs), animations, or presentations.

The product submission and distribution system 100 also includes a first client 110 and a second client 112. Typically, the product submission and distribution system 100 would include a plurality of different clients 110, 112. The first client 110 includes a network access program 114. The second client 112 includes a product submission program 116. Some clients can also include both the network access program 114 and the product submission program 116. The network access program 114 is an application program (e.g., software application) that operates on the first client 110, which is a computing device. One example of a suitable network access program is a network browser (e.g., Microsoft Explorer or Safari). Another example of a suitable network access program is iTunes™ offered by Apple Inc. The first client 110 can be coupled to the product distribution site 102 through the data network 108. Hence, any of the first clients 110 can interact with the product distribution site 102 to review, purchase and/or manage digital products.

The product submission program 116 is also an application program (e.g., software application) that operates on the second client 112, which is a computing device. The product submission program 116 is used to submit digital products to the product submission and management system 104 for eventual distribution by the media distribution site 102. Although the network access program 114 and the product submission program 116 are shown in FIG. 1 as separate programs, it should be understood that such programs can be integrated into a single program or reside on the same client machine.

In the product submission and distribution system 100 shown in FIG. 1, the digital products are submitted to the product submission and management system 104 by way of the product submission program 116. The digital products that have been submitted (e.g., via the second client 112) are processed and then, if accepted, stored in the products store 106 for distribution. Thereafter, the stored digital products are available to be purchased from the product distribution site 102.

The product submission and distribution system 100 allows a user of the client 110 to utilize the network access program 114 to browse, search or sort through a plurality of digital products that can be purchased from the product distribution site 102. The network access program 114 may also allow the user to preview or demo some or all of a digital product. In the event that the user of the network access program 114 desires to purchase a particular digital product, the user (via the network access program 114) and the product distribution site 102 can engage in an online commerce transaction in which the user pays for access rights to the particular digital product. In one embodiment, a credit card associated with the user is credited for a purchase or rental amount of the particular digital product.

Upon purchasing a particular digital product, the product distribution site 102 permits the digital data for the particular digital product to be retrieved from the products store 106 and then delivered (e.g., downloaded) from the product distribution site 102 to the requesting client 110 through the data network 108. In this regard, the product distribution site 102 or some other delivery server (not shown) obtains the digital data corresponding to the particular digital product from the products store 106 and downloads such digital data through the data network 108 to the client 110. The downloaded digital data can then be stored on the client 110. In one embodiment, the downloaded digital data is encrypted as received at the client 110 but is decrypted and then perhaps re-encrypted before persistently stored on the client 110. Thereafter, the client 110 can utilize (e.g., execute) the digital data of the digital product at the client 110.

The submission and purchase of the digital products can be achieved over the data network 108. In other words, the submission and purchase of the digital products can be achieved online. The purchase of media items online can also be referred to as electronic commerce (e-commerce). In one embodiment, the data network 108 makes use of at least a portion of the Internet. In one embodiment, the connections through the data network 108 between the product distribution site 102 and the clients 110, 112 can be through secure connections, such as Secure Sockets Layer (SSL). The clients 110, 112 can vary with application but generally are computing devices that have memory storage. Often, the clients 110, 112 are personal computers or other computing devices that are capable of storing and presenting media to their users. In one embodiment, one or more of the clients can be portable computing devices (e.g., laptop or network computers) or handheld computing devices (e.g., PDAs, smart phones, multi-function electronic devices, or media players).

The digital products can include one or more supplemental features. The supplemental features can serve to supplement or augment corresponding digital products. As shown in FIG. 1, a digital product 118 acquired and downloaded from the product distribution site 102 via the data network 108 can be stored on the client 110. In one embodiment, the digital product 118 can include a supplemental feature 120. However, when the digital product 118 is initially acquired, the supplemental feature 120 is inactive or locked such that it is not usable by the digital product 118. However, during operation of the digital product 118 on the client 110, the digital product 118 can initiate acquisition of usage of the supplemental feature 120. In such case, the digital product 118 (itself or with assistance of an operating system) can communicate with a feature acquisition manager 122 of the product distribution site 102. Typically, the digital product 118 was previously acquired from the product distribution site 102. The feature acquisition manager 122 manages processing of incoming requests for access to supplemental features. For example, the feature acquisition manager 122 receives the incoming requests for access to supplemental features, determines whether the request is valid and permitted to be processed, processes payment, if any, for such access, and sends an authorization response to the requesting client device 110. Upon receiving the authorization response, the digital product 118 can render the supplemental feature 120 accessible (i.e., unlocked). In such an embodiment, the supplemental feature is provided with the digital product 118 is initially downloaded to the client 110, and thereafter only an authorization need to be delivered to the client 110 to render the supplemental feature 120 active. However, in an alternative embodiment, the supplemental feature 120 could be delivered to the client 110 only after authorized (and thus provided separately from the delivery of the digital product 118).

Although the product distribution site 102, the product submission and management system 104 and the products store 106 are shown in FIG. 1 as being separate components, it should be understood that any of these components can be combined into one or more apparatus. For example, the product submission and management system 104 can be incorporated into the product distribution site 102. As another example, the products store 106 can be incorporated into the product distribution site 102 or the product submission and management system 104.

To facilitate communication with the product distribution site (e.g., the feature acquisition manager 122) by the client 110 with respect to acquiring usage of the supplemental feature 120 of the application program 118, the product distribution site 102 can support an Application Programming Interface (API). For example, the APIs for the product distribution site 102 might, in once embodiment, include the following APIs shown below in Appendix A.

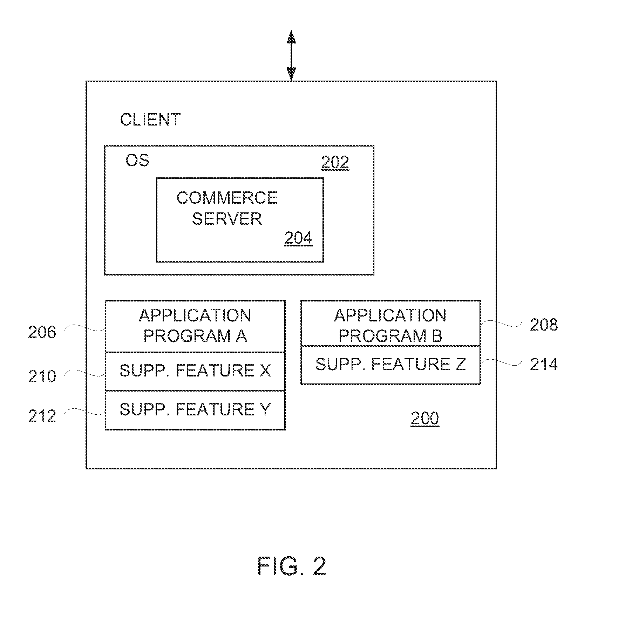

FIG. 2 is a block diagram of a client 200, or client device, according to one embodiment of the invention. The client 200 can, for example, be suitable for use as the client 110 illustrated in FIG. 1.

The client 200 includes an operating system (OS) 202 that operates on the client 200 to provide basic computing services to application programs that may execute on the client 200. In addition, the operating system 202 includes a commerce server 204. The commerce server 204 is utilized by application programs operating on the client 200 to perform commerce operations with respect to a remote server, such as a remote digital product distribution server. For example, the remote server can pertain to the product distribution server 102 illustrated in FIG. 1.

The client 200 can also includes one or more application programs that are installed on the client 200 and which can be executed by the client 200. Typically, these application where acquired and download from a remote server (e.g., product distribution server 102) to the client 200. The applications resident and installed on the client 200 are represented by application program A 206 and application program B 208. As illustrated in FIG. 2, the application program A 206 includes a supplemental feature X 210 and a supplemental feature Y 212. Typically, as the application program A 206 is initially acquired from a remote server, the supplemental features 210 and 212 are present but "locked" and thus are not currently usable. Similarly, the application program B 208 as acquired includes the supplemental feature Z 214 which is initially "locked". Additionally, the application program A 206 and the application program B 208 can interact with the remote server (e.g., remote digital product distribution server) by way of the commerce server 204 so as to have the desired one or more of the supplemental features 210, 212 and 214 "unlocked". Once a supplemental feature becomes "unlocked", the associated application program can thereafter utilize the supplemental feature.

To facilitate communication between the application programs 206, 208 and the commerce server 204, the commerce server 204 can support an Application Programming Interface (API). For example, the APIs for the commerce server 204 might, in once embodiment, include the following APIs shown below in Appendix B. Appendix B also contains information on how to modify application programs to support and distribute supplemental features using the product distribution site 102 (e.g., host a network-based application store).

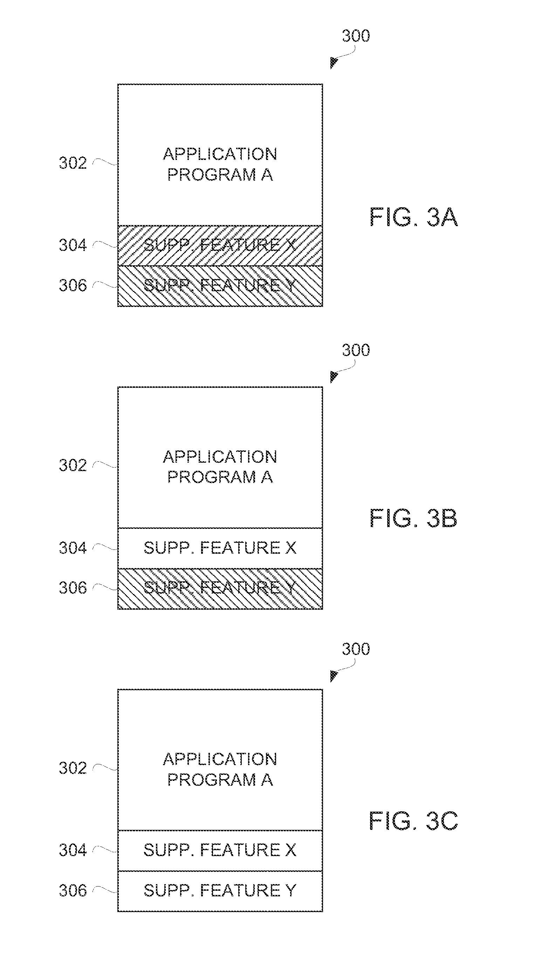

FIGs. 3A-3C are diagrams illustrating accessing supplemental features according to one embodiment of the invention. FIG. 3A illustrates an exemplary digital product 300 according to one embodiment. The exemplary digital product 300 can be acquired from a remote server, such as the product distribution site 102 illustrated in FIG. 1. The exemplary digital product 300 includes not only an application program 302 but also a supplemental feature X 304 and a supplemental feature Y 306. As shown in FIG. 3A, the supplemental feature X 304 and the supplemental feature Y 306 are both in the "locked" state. As discussed further herein, when authorized, the supplemental features of an application program can be unlocked. In general, the supplemental features can be unlocked individually and in some cases a quantity (greater than one) of like features can be made available. In FIG. 3B, the supplemental feature X 304 of the exemplary digital product 300 has been "unlocked" such that it can be used in conjunction with the application program A 302. However, the supplemental feature Y 306 remains "locked" in FIG. 3B. In FIG. 3C, the supplemental feature X 304 and the supplemental feature Y 306 of the exemplary digital product 300 have both been "unlocked" such that they can be used in conjunction with the application program A 302.

As noted above, the supplemental features (or supplemental components) of application programs (or digital products) can vary depending on implementation. The supplemental features can pertain to: modules, tools, characters, functionality, content, or data. For a game-based application program, the supplemental features can be: new weapons, new characters, extended lives, additional game levels, etc. For productivity applications, the supplemental feature can be: additional modules (e.g., yearly module, geographic module, content-based module, etc.), additional or enhanced functions (wireless communications, printing, storage, etc.), etc. For informational applications, the supplemental feature can be: additional content or data, additional learning or information modules, etc.

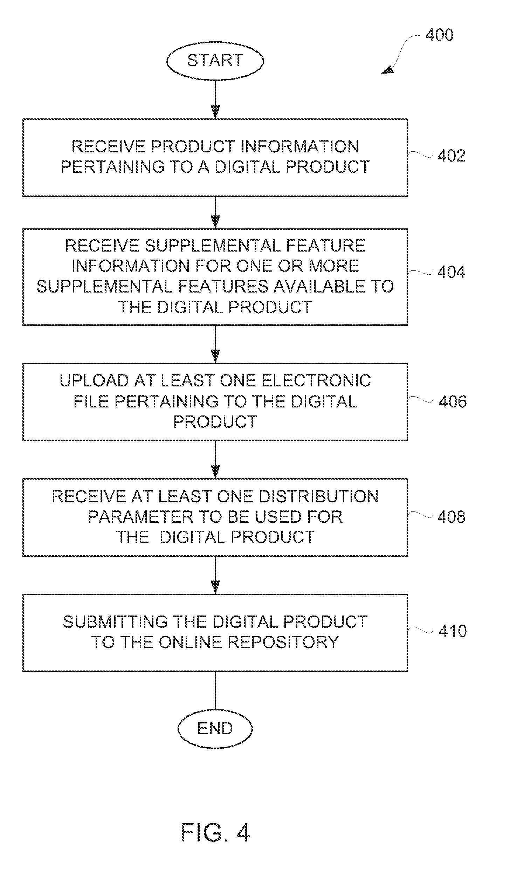

FIG. 4 is a flow diagram of a digital product submission process 400 according to one embodiment of the invention. The digital product submission process 400 can, for example, be performed by a client device, such as the client 112, or a server device, such as the product submission and management system 104.

The digital product submission process 400 can receive 402 product information pertaining to a digital product. The product information can vary depending upon the type of digital product being submitted. In one implementation, one type of digital product that can be submitted to an online repository by the digital product submission process 400 is a digital program product, such as a computer program product. Examples of product information for a computer program product can include one or more of: a product name, a supported device type indication, genre indication, version number, product identifier, support information, and license agreement information. In addition, when the digital program product incorporates one or more supplemental features, the digital product submission process 400 can also receive 404 supplemental information for the one or more supplemental features.

Next, a least one electronic file pertaining to a digital product can be uploaded 406. The digital product can have one or more electronic files associated therewith. For example, the digital product may include a binary file, a support or help file, and/or one more exemplary screen illustrations.

In addition, a least one distribution parameter to be used with the digital product can be received 408. A distribution parameter is a parameter that can be utilized to control or influence the manner in which the digital product is able to be distributed. One example of a distribution parameter is a pricing parameter. As an example, a pricing parameter can specify a price or a price tier to be associated with the digital product. Other distribution parameters can pertain to digital storefronts from which the digital product is to be distributed from. Still further, distribution parameters could also pertain to preview eligibility, license categories (types), etc.

Thereafter, the digital product can be submitted 410 to the online repository. The online repository can, for example, correspond to the product submission and management system 104. The online repository can receive the one or more electronic files, the associated product information, the supplemental feature information, and the one or more distribution parameters. The online repository can then operate to permit distribution of the digital product, as contained in the one or more electronic files, from a product distribution site (e.g., an online store) in accordance with the product information and the one or more distribution parameters. The online repository can also then operate to facilitate subsequent access to the one or more supplemental features of the digital product. After the submission 410 of the digital product to the online repository, the digital product submission process 400 can end.

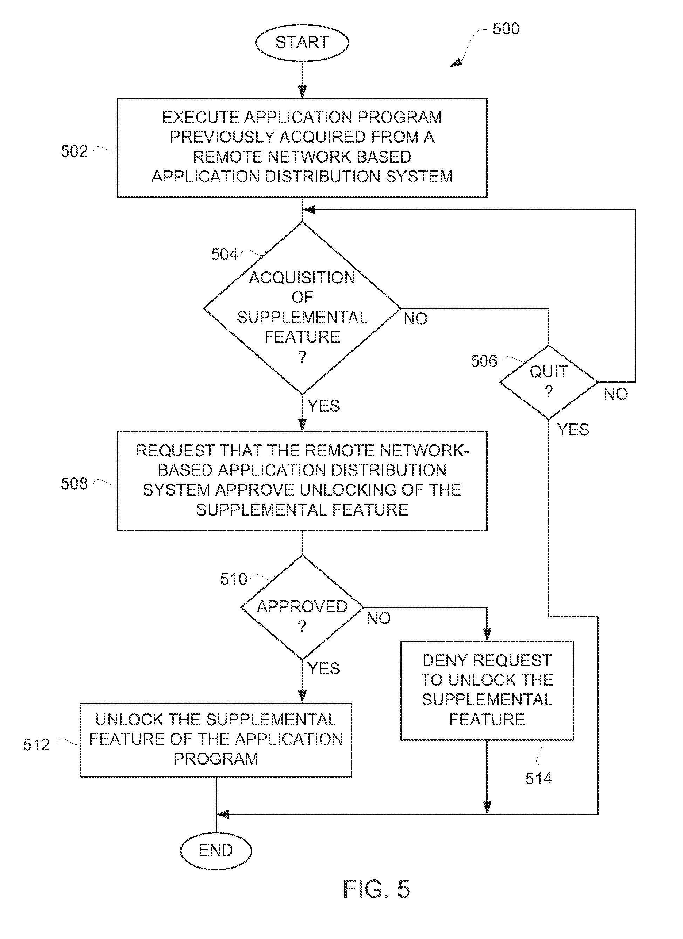

FIG. 5 is a flow diagram of a supplemental feature client process 500 according to one embodiment of the invention. The supplemental feature client process 500 can, for example, be performed on a client (i.e., client device), such as the client 110 illustrated in FIG. 1.

The supplemental feature client process 500 can execute 502 an application program previously acquired from a remote network-based application distribution system. For example, the remote network-based application description system can, for example, pertain to the product submission and distribution system 100 illustrated in FIG. 1. Here, an application program that was previously acquired from the remote network-based application distribution system is executed 502 at the client. At some point during execution, a decision 504 can be presented at the client. The decision 504 determines whether or not acquisition of a supplemental feature is to be performed. In one embodiment, the decision 504 can be determined based on user input indicating whether or not a user of the client desires to acquire the supplemental feature for the application program. For example, during execution of the application program, the application program can present a supplemental feature offer to the user, and the user can respond to the offer, thereby indicating whether or not the supplemental feature is desired by the user.

In any case, when the decision 504 determines that acquisition of a supplemental feature is not requested, a decision 506 can determine whether the application program should quit (i.e., end). When the decision 506 determines that the application program should not quit, then the application program continues and the supplemental feature client process 500 returns to repeat the decision 504. Alternatively, when the decision 506 determines that the application program should quit, then the supplemental feature client process 500 can end.

On the other hand, when the decision 504 determines that acquisition of a supplemental feature is requested, a request 508 can be made to the remote network-based application distribution system. The request 508 can be a request that the remote network-based application distribution system approve unlocking of the supplemental feature. A decision 510 can then determine whether the remote network-based application distribution system has approved the unlocking of the supplemental feature. When the decision 510 determines that the remote network-based application distribution system has approved the unlocking of the supplemental feature, the supplemental feature of the application program can be unlocked 512. Here, in one environment, the remote network-based application distribution system can inform the client that the supplemental feature is approved to be unlocked, and then the application program can operate to unlock the supplemental feature. Alternatively, when the decision 510 determines that the remote network-based application distribution system has not approved (i.e., denied) the unlocking of the supplemental feature, the request to unlock the supplemental feature is denied 514. Here, by informing the client that the supplemental feature is not approved be unlocked, the application program does not operate to unlock the supplemental feature, whereby the supplemental feature remains locked. Following the block 512 or the block 514, the supplemental feature client process 500 can end.

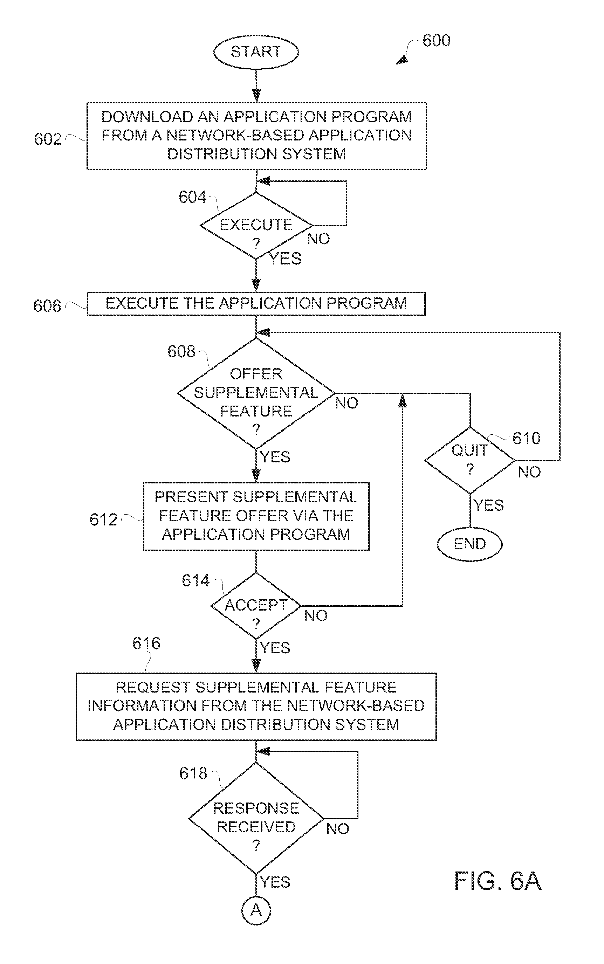

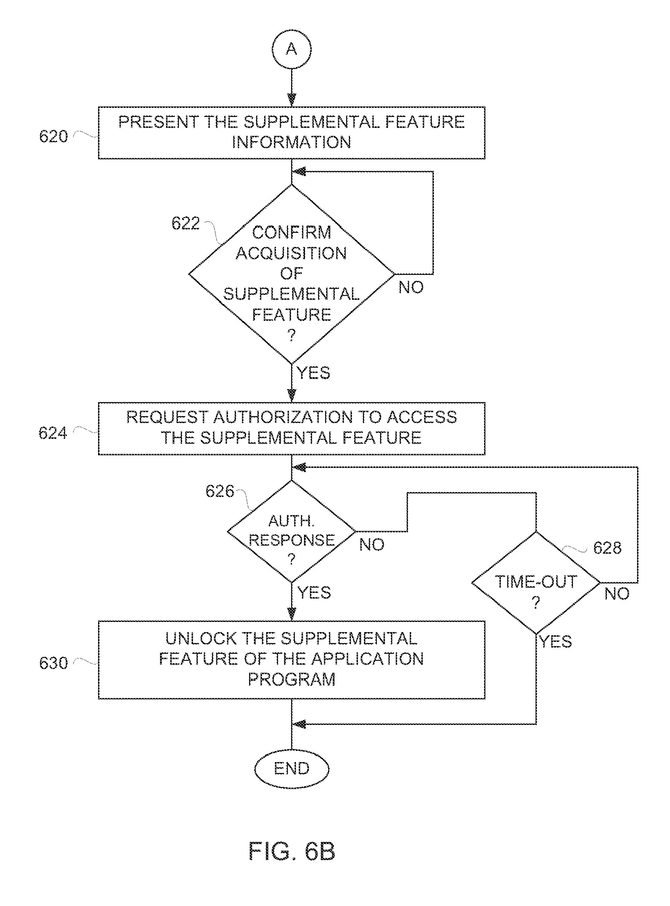

FIGs. 6A and 6B are flow diagrams of a supplemental feature client process 600 according to one embodiment of the invention. The supplemental feature client process 600 can, for example, be performed by a client (client device), such as the client 110 illustrated in FIG. 1.

The supplemental feature client process 600 can begin by download 602 of an application program from a network-based application distribution system. For example, a user of the client can interact with the network-based application distribution system to identify, purchase and download the application program. Once downloaded, the application program can be installed on the client. Thereafter, a decision 604 can determine whether the application program is to be executed. When the decision 604 determines that the application program is not the executed, the supplemental feature client process 600 effectively waits until the application program is executed. Once the decision 604 determines that the application program is to be executed, the application program is executed 606.

Next, a decision 608 can determine whether a supplemental feature is to be offered at the client. When the decision 608 determines that a supplemental feature is not the offered, a decision 610 can determine whether the supplemental feature client process 600 should quit (end). When the decision 610 determines that the supplemental feature client process 600 should end, then the supplemental feature client process 600 can end without rendering a supplemental feature available. Alternatively, when the decision 610 determines that the supplemental feature client process 600 should not end, the supplemental feature client process 600 returns to repeat the decision 608.

On the other hand, when the decision 608 determines that a supplemental feature is to be offered, a supplemental feature offer can be presented 612. Here, the supplemental feature offer being presented 612 can be viewed or heard by the user of the client operating the application program. In one implementation, the supplemental feature offer is presented 612 by the application program being executed on the client. A decision 614 can then determine whether the user accepts the supplemental feature offer. When the decision 614 determines that the user has not accepted the supplemental feature offer, the supplemental feature client process 600 can return to repeat the decision 610 whereby the supplemental feature client process 600 can continue or quit.

Alternatively, when the decision 614 determines that the user has accepted the supplemental feature offer, supplemental feature information can be requested 616 from the network-based application distribution system. A decision 618 determines whether a response has been received to the request for the supplemental feature information. When the decision 618 determines that a response is not yet been received, the supplemental feature client process 600 can await such a response. On the other hand, once the decision 618 determines that a response to the request for the supplemental feature information has been received, the supplemental feature information can then be presented 620. The supplemental feature information is presented 620 to provide the user of the application program operating on the client with information about the supplemental feature being offered. For example, the supplemental feature information can be displayed by the client, such as the application program or by an operating system.

Next, a decision 622 can determine whether the user has confirmed acquisition of the supplemental feature. According to one implementation, apart from the application program, the operating system can require that the user confirm that they desire to acquire the supplemental feature. This decision 622 serves to manage the acquisition of supplemental features in a controlled way so that application programs do not carelessly or inappropriately acquire supplemental features for users. When the decision 622 determines that the acquisition of the supplemental feature has not yet been confirmed, the supplemental feature client process 600 can await such a confirmation. In the event that the confirmation does not occur within a predetermined period of time, the decision 622 could alternatively cause the supplemental feature client process 600 to end.

Alternatively, when the decision 622 determines that the acquisition of the supplemental feature has been confirmed by the user, authorization to access the supplemental feature can be requested 624. Here, the request for authorization to access the supplemental feature can, for example, be made to the networked-based application distribution system. A decision 626 then determines whether authorization to access the supplemental feature has been received. The authorization can be provided as or within an authorization response. The authorization response, if provided, is received by the client. Hence, the decision 626 determines whether the authorization response has been received. When the decision 626 determines that the authorization response has not been received, a decision 628 can determine whether a time-out has occurred. When the decision 628 determines that a time-out has occurred, the supplemental feature client process 600 can end. On the other hand, when the decision 628 determines that a time-out has not occurred, the supplemental feature client process 600 can return to repeat the decision 626 to await the reception of the authorization response. Once the decision 626 determines that the authorization response has been received, the supplemental feature of the application program can be unlocked 630. Typically, the application program itself can act to unlock the supplemental feature if the authorization response provided to the client. Following the block 630, the supplemental feature client process 600 can end.

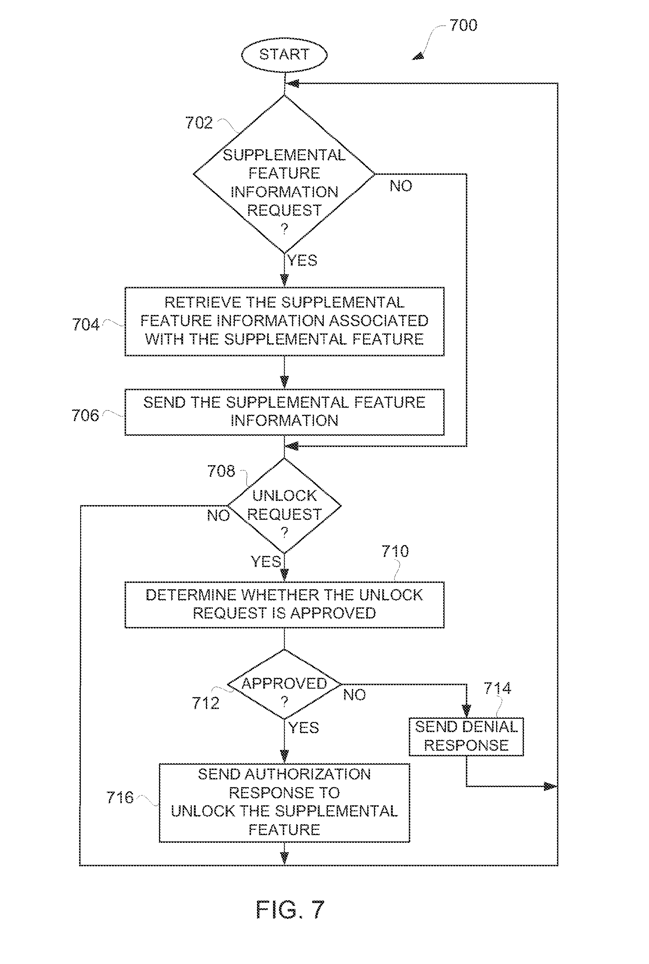

FIG. 7 is a flow diagram of a supplemental feature server process 700 according to one embodiment of the invention. The supplemental feature server process 700 is, for example, performed by a server (server device) such as the product distribution site 102 illustrated in FIG. 1.

The supplemental feature server process 700 can began with a decision 702. The decision 702 can determine whether a supplemental feature information request has been received. Typically, the supplemental feature information request can be received from a client. As an example, the supplemental feature information request can be initiated by block 616 of the supplemental feature client process 600 illustrated in FIGs. 6A and 6B.

When the decision 702 determines that a supplemental feature information request has been received, the supplemental feature information associated with the supplemental feature can be retrieved at 704. For example, the server has access to data storage that can store the supplemental feature information for a plurality of different supplemental features. As a particular example, the supplemental feature information can be part of the product information stored in the products storage 106, which may be a database. The supplemental feature information that has been retrieved 704 can then be sent 706. Typically, the supplemental feature information is sent 706 to the client that initiated the supplemental feature information request. Alternatively, when the decision 702 determines that a supplemental feature information request has not been received, the blocks 704 and 706 can be bypassed.

Following the block 706, or its being bypassed, the supplemental feature server process 700 can perform processing associated with unlocking a supplemental feature. Specifically, a decision 708 can determine whether an unlock request has been received. Typically, the unlock request can be received from the client. As an example, the unlock request (which is also an authorization request) can be initiated by block 624 of the supplemental feature client process 600 illustrated in FIGs. 6A and 6B.

When the decision 708 determines that an unlock request has been received, the supplemental features server process 700 can determine 710 whether the unlock request is to be approved. In one implementation, the approval can require that one or more requirement be met. The requirement can vary with implementation be can include one or more of payment for the supplemental feature, prior purchase of the application program, existence of user account, etc. When the decision 712 determines that the unlock request is not approved, the supplemental feature server process 700 can sends 714 a denial response to the client that made the unlock request. The denial response may indicate a reason for the denial. Alternatively, when the decision 712 determines that the unlock request is approved, an authorization response to unlock the supplemental feature is sent 716 to the client providing the unlock request. The authorization response can include an authorization code or codes can that can be utilized to unlock the particular supplemental feature for which the unlock has been requested. In one implementation, the authorization response is sent 716 to the application program operating on the client, and the application program can then act to unlock the supplemental feature (e.g., block 630 of the supplemental feature client process 600 illustrated in FIGs. 6A and 6B).

On the other hand, when the decision 708 determines that an unlock request has not been received, the block 710-716 can be bypassed. Following the blocks 714 or 716 (or the bypass of such blocks), the supplemental features server process 700 can return to repeat the decision 702.

U.S. Provisional Patent Application No. 61/160,640, filed March 16, 2009, entitled "APPLICATION PRODUCTS WITH IN-APPLICATION SUBSEQUENT FEATURE ACCESS USING NETWORK-BASED DISTRIBUTION SYSTEM", is hereby incorporated herein by reference.

This application also references and/or incorporates: (1) U.S. Patent Application No. 10/687,534, filed October 15, 2003, and entitled "METHOD AND SYSTEM FOR SUBMITTING MEDIA FOR NETWORK-BASED PURCHASE AND DISTRIBUTION", which is hereby incorporated herein by reference; (2) U.S. Patent Application No. 11 /712,303, filed February 27, 2007, and entitled "PROCESSING OF METADATA CONTENT AND MEDIA CONTENT RECEIVED BY A MEDIA DISTRIBUTION SYSTEM", which is hereby incorporated herein by reference; (3) U.S. Patent Application No. 11/609,815, filed December 12, 2006, and entitled "TECHNIQUES AND SYSTEMS FOR ELECTRONIC SUBMISSION OF MEDIA FOR NETWORK-BASED DISTRIBUTION", which is hereby incorporated herein by reference; (4) U.S. Patent Application No. 11/622,923, filed January 12, 2007, and entitled "COMPUTERIZED MANAGEMENT OF MEDIA DISTRIBUTION AGREEMENTS" , which is hereby incorporated herein by reference; (5) U.S. Patent Application No. 12/286,076, filed September 26, 2008, entitled "ELECTRONIC SUBMISSION AND MANAGEMENT OF DIGITAL PRODUCTS FOR NETWORK-BASED DISTRIBUTION", which is hereby incorporated herein by reference; (6) U.S. Patent Application No. 12/286,075, filed September 26, 2008, entitled "NETWORK-BASED DISTRIBUTION OF APPLICATION PRODUCTS", which is hereby incorporated herein by reference; (7) U.S. Patent Application No. 12/286,092, filed September 26, 2008, entitled "ELECTRONIC SUBMISSION OF APPLICATION PROGRAMS FOR NETWORK-BASED DISTRIBUTION", which is hereby incorporated herein by reference; (8) U.S. Patent Application No. 12/368,111, filed February 2, 2009, entitled "INTELLIGENT DOWNLOAD OF APPLICATION PROGRAMS", which is hereby incorporated herein by reference; (9) U.S. Provisional Patent Application No. 61/180,925, filed May 25, 2009, entitled "CONFIGURATION AND MANAGEMENT OF ADD-ONS TO DIGITAL APPLICATION PROGRAMS FOR NETWORK-BASED DISTRIBUTION", which is hereby incorporated herein by reference; and (10) U.S. Patent Application No. [Att.Dkt.No. 101-P685], filed September 30, 2009, entitled "CONFIGURATION AND MANAGEMENT OF ADD-ONS TO DIGITAL APPLICATION PROGRAMS FOR NETWORK-BASED DISTRIBUTION", which is hereby incorporated herein by reference.

The various aspects, features, embodiments or implementations of the invention described above can be used alone or in various combinations.

Embodiments of the invention can, for example, be implemented by software, hardware, or a combination of hardware and software. Embodiments of the invention can also be embodied as computer readable code on a computer readable medium. The computer readable medium is any data storage device that can store data which can thereafter be read by a computer system. Examples of the computer readable medium generally include read-only memory and random-access memory. More specific examples of computer readable medium are tangible and include Flash memory, EEPROM memory, memory card, CD-ROM, DVD, hard drive, magnetic tape, and optical data storage device. The computer readable medium can also be distributed over network-coupled computer systems so that the computer readable code is stored and executed in a distributed fashion.

The many features and advantages of the present invention are apparent from the written description. Further, since numerous modifications and changes will readily occur to those skilled in the art, the invention should not be limited to the exact construction and operation as illustrated and described. Hence, all suitable modifications and equivalents may be resorted to as falling within the scope of the invention.

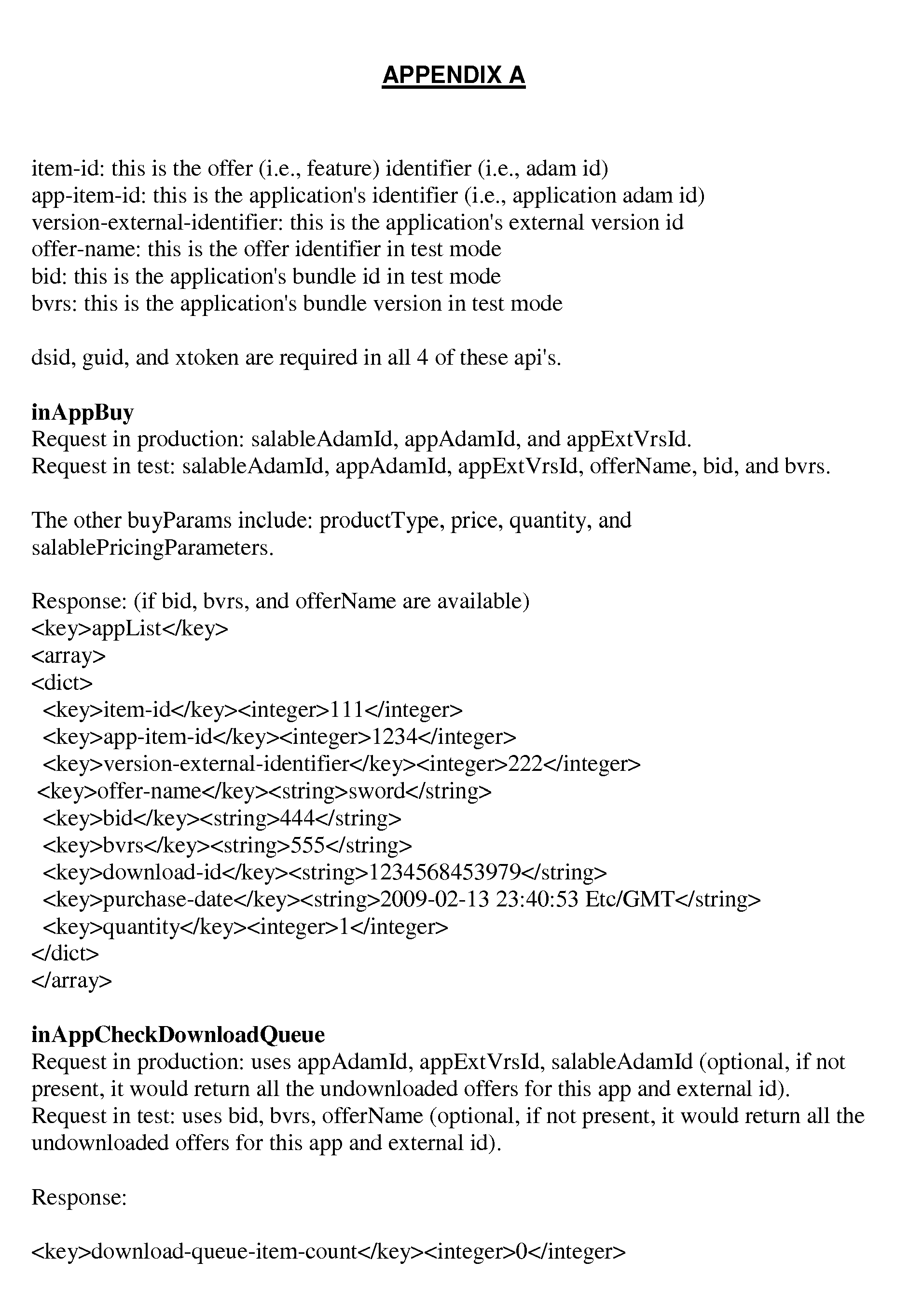

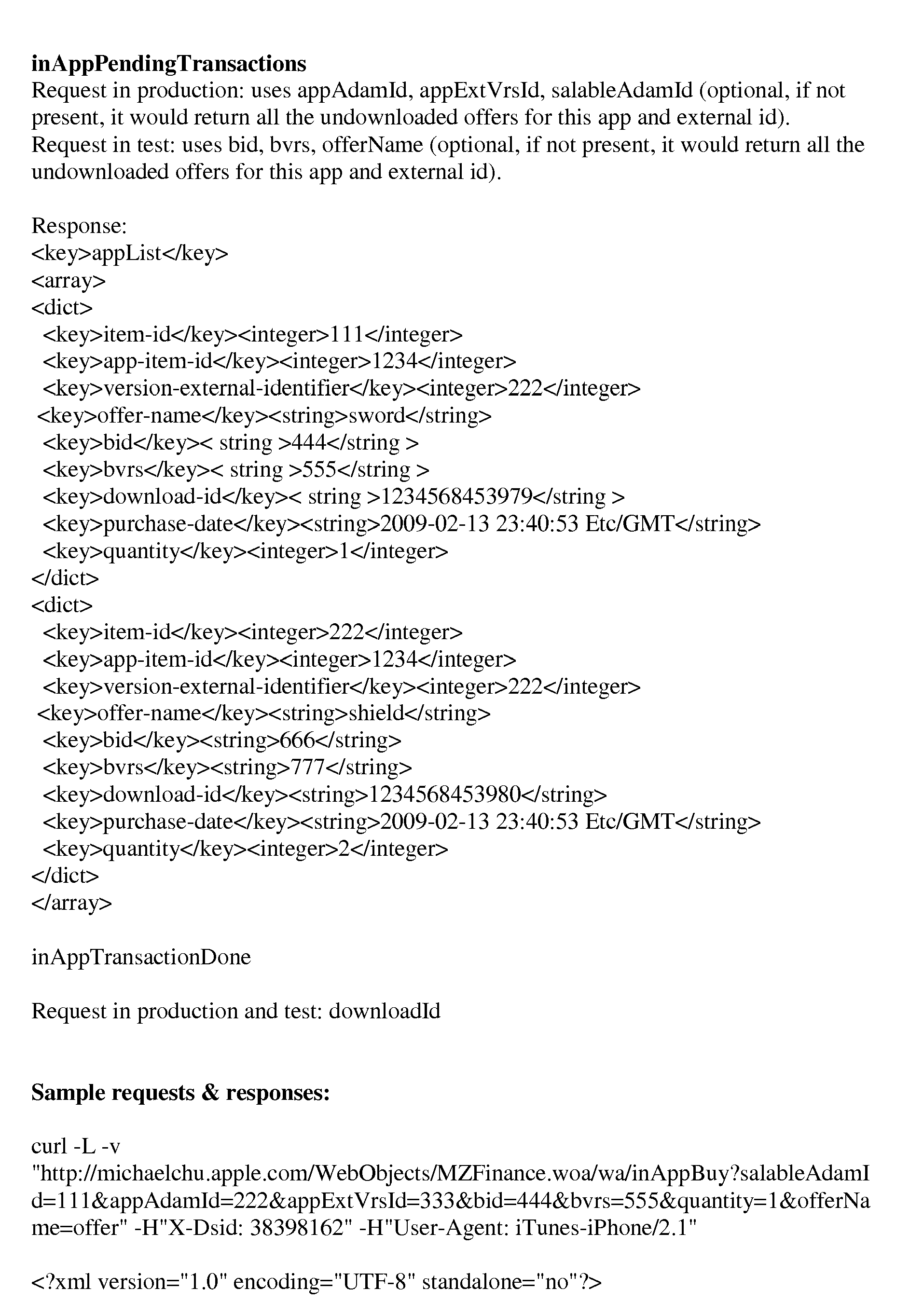

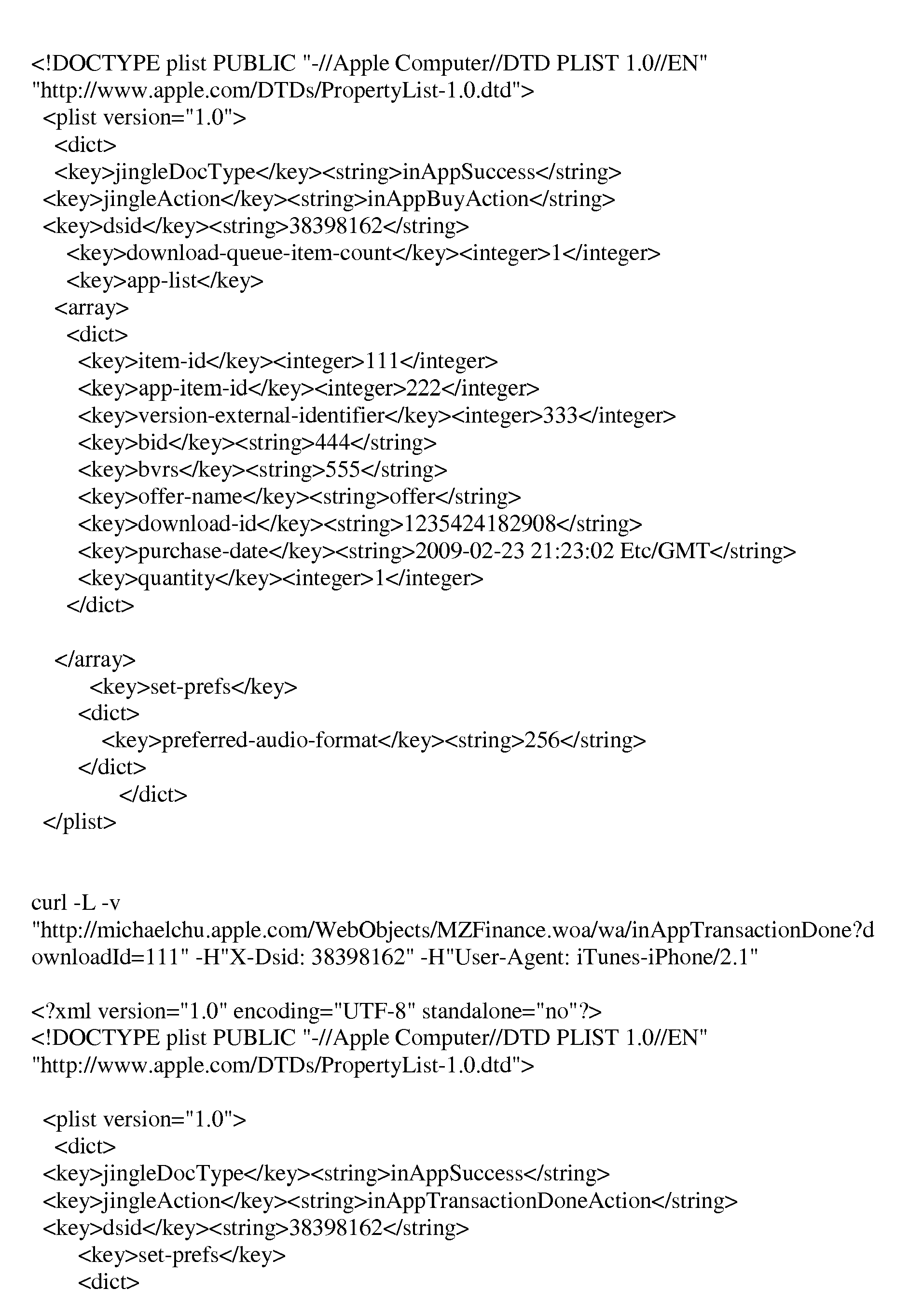

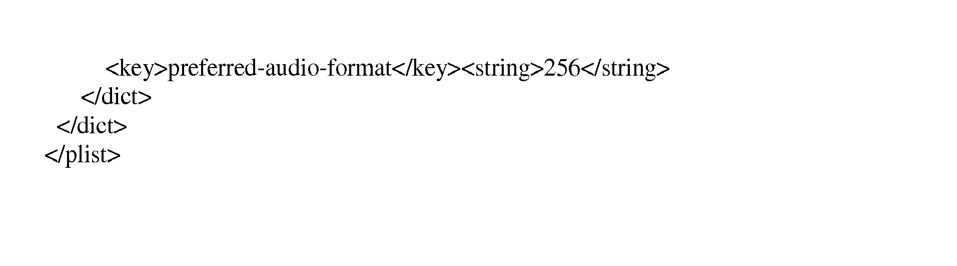

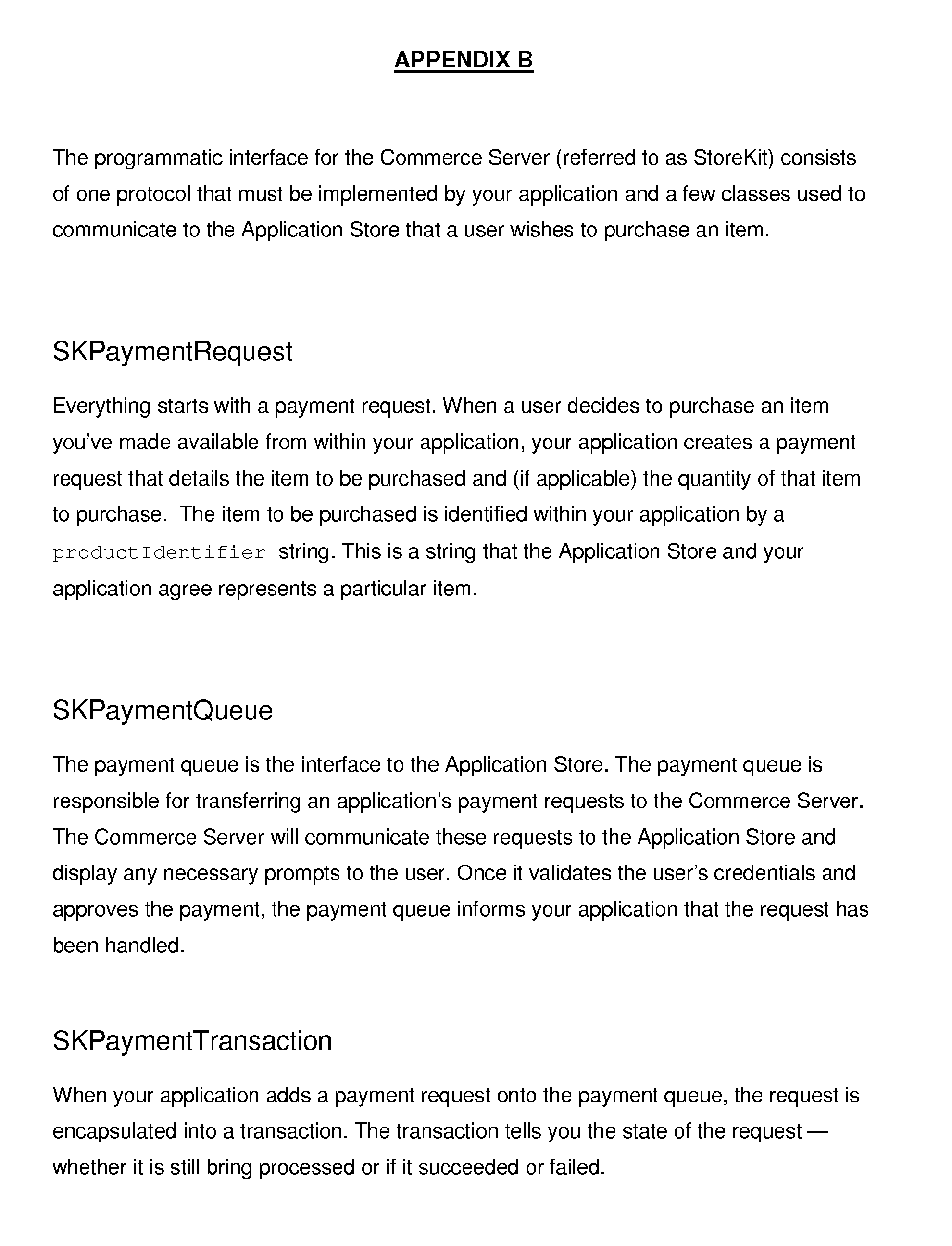

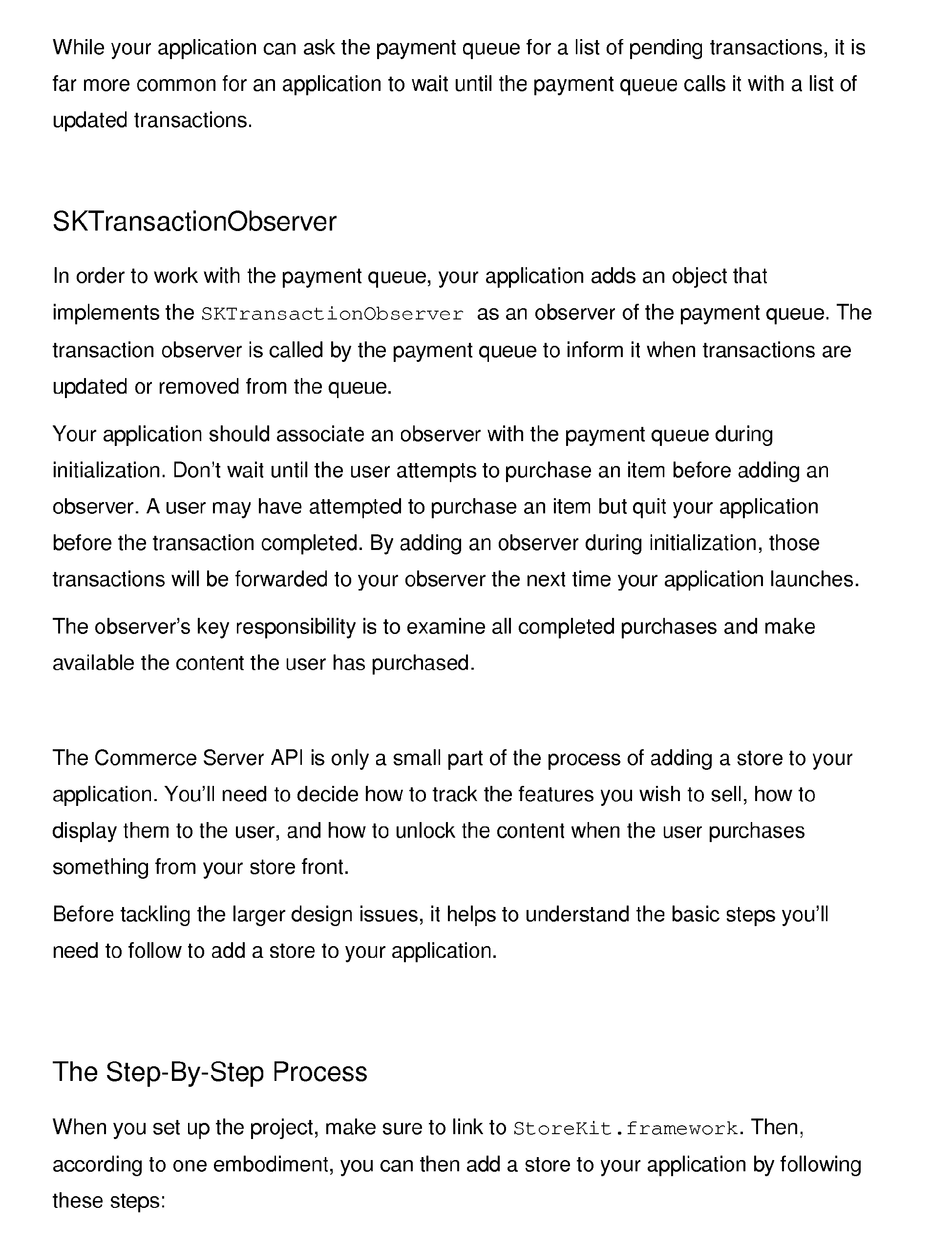

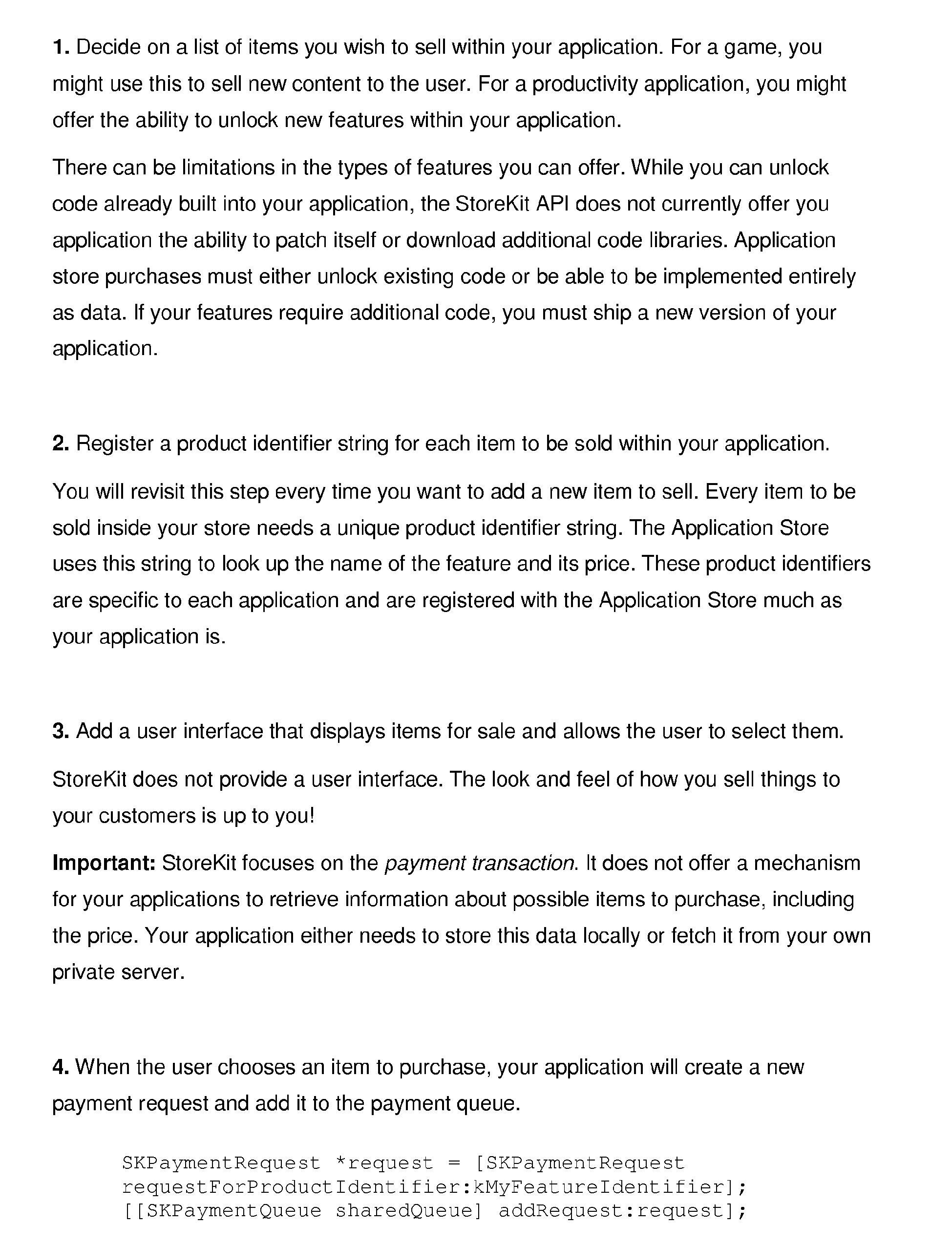

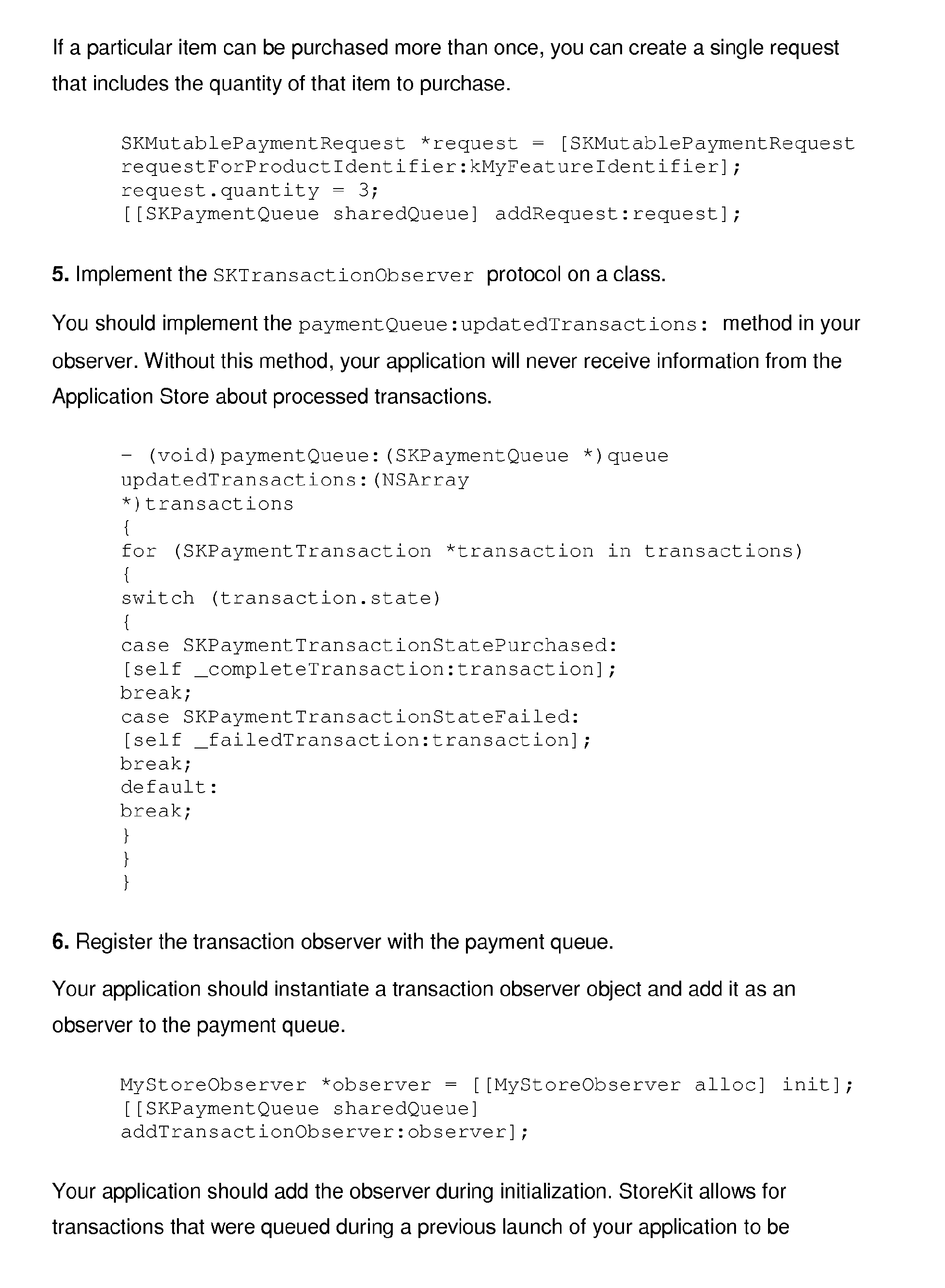

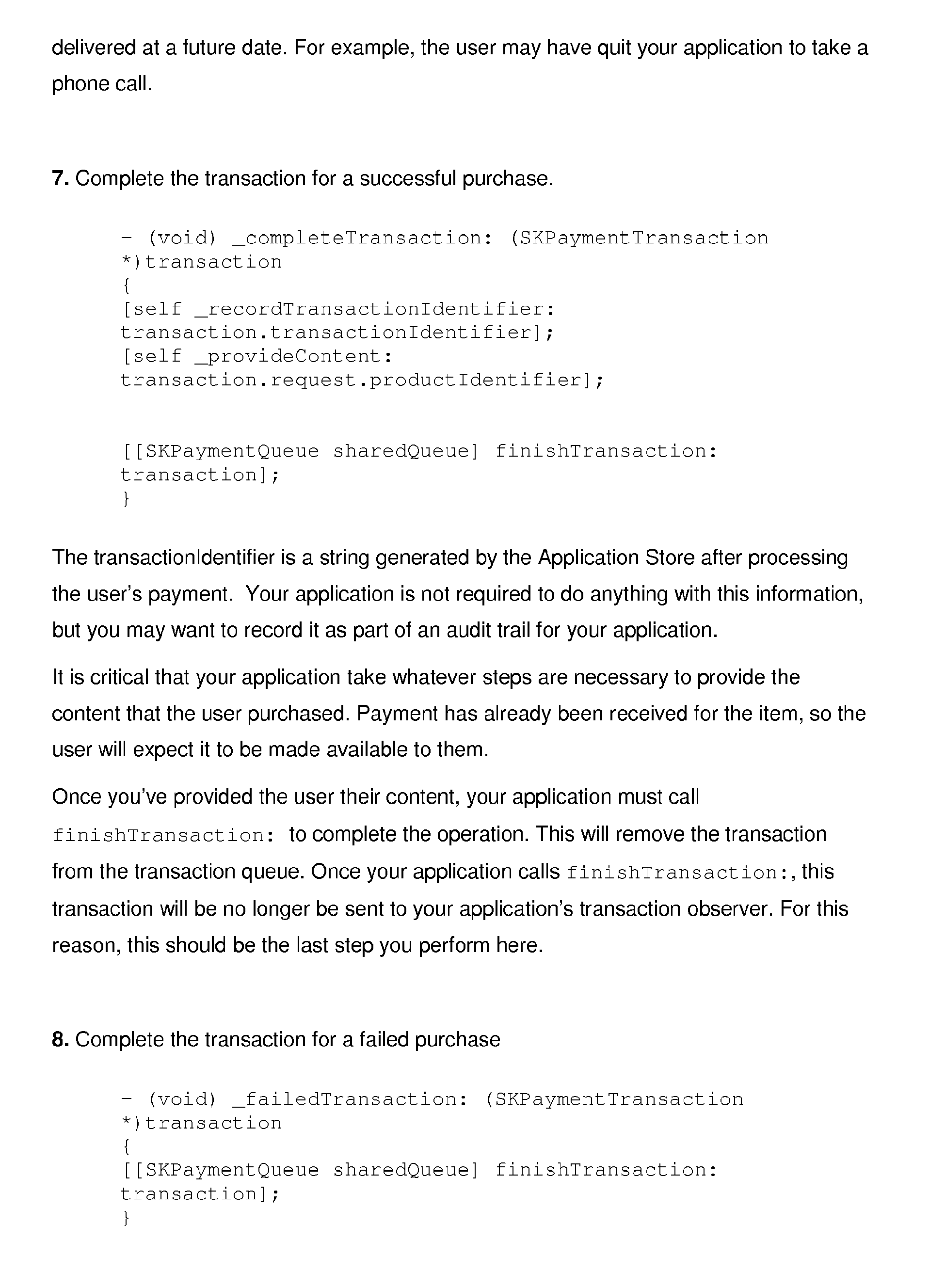

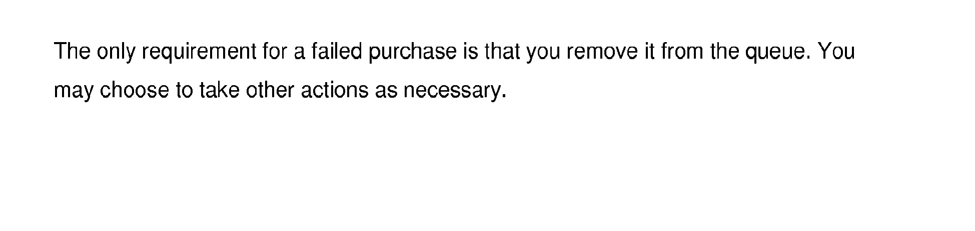

## Claims

1. A method for unlocking supplemental features of an application program, said method operating on a computing device, and said method comprising:
executing an application program on the computing device, the application program being previously acquired from a remote network-based application distribution system, the application program including at least one supplemental feature that is presently locked and located within the application program but available to be unlocked;
determining, at the computing device, that a user of the application program desires to acquire usage of the at least one supplemental feature that is presently locked;
requesting that the remote network-based application distribution system approve unlocking of the at least one supplemental feature;
receiving an authorization from the remote network-based application distribution system that the at least one supplemental feature is approved for unlocking; and
thereafter unlocking the at least one supplemental feature of the application program at the computing device, thereby permitting the application program to utilize the at least one supplemental feature.

2. A method as recited in claim 1, wherein said method further comprises:
requesting, prior to said determining, supplemental feature information from the remote network-based application distribution system, the supplemental feature information including at least descriptive information pertaining to the at least one supplemental feature;
subsequently receiving, at the computing device, the supplemental feature information from the remote network-based application distribution system; and
presenting, prior to said determining, the supplemental feature information at the computing device.

3. A method as recited in claim 1 or 2, wherein said requesting comprises:
sending a request to the remote network-based application distribution system, the request including at least (i) a feature identifier for the at least one supplemental feature and (ii) an application identifier for the application program.

4. A method as recited in any of claims 1-3,
wherein the computing device includes an operating system, and wherein communications between the application program and the remote network-based application distribution system are handled through the operating system,
wherein said determining, said requesting and said receiving are performed by the operating system while the application program is still operating, and
wherein said unlocking is performed by the application program.

5. A method as recited in any of claims 1-5, wherein said method operates while the application program remains executing.

6. A computer-implemented method for managing unlocking of supplemental features of application programs that have been previously acquired from a network-based application distribution system, said method comprising:
receiving a request from a computing device for supplemental feature information from the remote network-based application distribution system;
retrieving the supplemental feature information associated with the supplemental feature of the application program, the supplemental feature information including at least descriptive information pertaining to a supplemental feature of an application program previously acquired from the network-based application distribution system;
sending the retrieved supplemental feature information to the computing device;
receiving a request from the computing device to unlock the supplemental feature of the application program;
determining whether the network-based application distribution system approves unlocking of the supplemental feature; and
sending an authorization to the computing device for unlocking the supplemental feature if said determining determines that the network-based application distribution system has approved unlocking of the supplemental feature.

7. A computer-implemented method as recited in claim 6,
wherein the application program is identified by an application identifier, and wherein the supplemental feature is identified by a feature identifier, and
wherein said retrieving of the supplemental feature information is based on the feature identifier and the application identifier.

8. A computer-implemented method as recited in claim 6, wherein said retrieving of the supplemental feature information comprises:
validating that the feature identifier is associated with the application identifier for the application program.

9. A computer-implemented method as recited in claims 7 or 8, wherein the supplemental feature information includes at least cost information to have the supplemental feature unlocked, and
wherein said determining comprises:
initiating payment processing for the supplemental feature at the network-based application distribution system.

10. A computer-implemented method for managing unlocking of supplemental features of application programs that have been previously acquired from a network-based application distribution system, said method comprising:
receiving a request from the computing device to unlock a supplemental feature of an application program previously acquired from the network-based application distribution system;
determining whether the network-based application distribution system approves unlocking of the supplemental feature; and
sending an authorization to the computing device for unlocking the supplemental feature if said determining determines that the network-based application distribution system has approved unlocking of the supplemental feature.

11. A computer-implemented method as recited in claim 10, wherein the application program is identified by an application identifier, and wherein the supplemental feature is identified by a feature identifier.

12. A mobile computing device comprising:
at least one application program having at least one locked feature; and
a commerce server resident on said mobile computing device, said commerce server configured to interact with a remote server to facilitate access to the at least one locked feature of said at least one application program, while said at least one application program is operating on said mobile computing device.

13. A mobile computing device as recited in claim 12,
wherein said mobile computing device is a handheld, multi-function electronic device,
wherein the handheld, multi-function electronic device provides capabilities for executing at least said at least one application program and for supporting wireless voice and data communications, and
wherein said mobile computing device further comprises an operating system, and wherein said commerce server is part of the operating system.

14. A mobile computing device as recited in claim 12 or 13, wherein the at least one application program informs a user of availability of the at least one locked feature, and wherein if the user requests to unlock the locked feature, the at least one application program interacts with said commerce server to determined whether the locked feature should be unlocked.

15. A mobile computing device as recited in claim 12,
wherein said commerce server is configured to determining that a user of the at least one application program desires to acquire usage of the locked feature,
wherein said commerce server is configured to interact with the remote server to (i) request that the remote server approve unlocking of the locked feature, and (ii) receive an authorization from the remote server that the locked feature is approved for unlocking, and
wherein said at least one application program is configured to unlock the locked feature of the application program at the computing device if the authorization from the remote server indicates that the locked feature is approved for unlocking.
